(19) Europäisches Patentamt
European Patent Office
Office européen des brevets

(11) **EP 3 087 286 B1**

(12) **FASCICULE DE BREVET EUROPEEN**

(45) Date de publication et mention
de la délivrance du brevet:
**21.02.2018 Bulletin 2018/08**

(21) Numéro de dépôt: **14814691.3**

(22) Date de dépôt: **08.12.2014**

(51) Int Cl.:
*F16D 55/226* (2006.01)   *F16D 65/56* (2006.01)
*F16D 121/02* (2012.01)   *F16D 125/06* (2012.01)
*F16D 125/10* (2012.01)   *F16D 125/40* (2012.01)
*F16D 125/52* (2012.01)   *F16D 129/02* (2012.01)
*F16D 129/10* (2012.01)

(86) Numéro de dépôt international:
**PCT/EP2014/076917**

(87) Numéro de publication internationale:
**WO 2015/096970 (02.07.2015 Gazette 2015/26)**

(54) **FREIN À DISQUE COMPORTANT UN FREIN DE STATIONNEMENT À ACTIONNEMENT HYDRAULIQUE**

SCHEIBENBREMSE MIT EINER PARKBREMSE MIT HYDRAULISCHER BETÄTIGUNG

DISK BRAKE COMPRISING A PARKING BRAKE HAVING HYDRAULIC ACTUATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363431**

(43) Date de publication de la demande:
**02.11.2016 Bulletin 2016/44**

(73) Titulaire: **Chassis Brakes International B.V.
5656 AG Eindhoven (NL)**

(72) Inventeurs:
• **WITTE, Lennart
F-95600 Eaubonne (FR)**
• **RIANDA, Romain
F-94170 Le Perreux Sur Marne (FR)**
• **GARCIA, César
F-95600 Eaubonne (FR)**
• **CUBIZOLLES, Cyril
F-93700 Drancy (FR)**

(74) Mandataire: **Brevalex
95, rue d'Amsterdam
75378 Paris Cedex 8 (FR)**

(56) Documents cités:
DE-A1-102006 001 546   FR-A1- 2 334 885
FR-A1- 2 989 657   US-A- 5 148 894

EP 3 087 286 B1

**Description**

DOMAINE TECHNIQUE DE L'INVENTION

La présente invention se rapporte à un frein à disque de véhicule automobile à actionnement hydraulique et comportant un frein de stationnement, ou frein de "parking", à actionnement hydraulique, aussi appelé "frein de stationnement hydraulique".

ETAT DE LA TECHNIQUE

On connaît du document EP-B1-551.397, la structure générale d'un frein à disque à commande hydraulique comportant un frein de stationnement hydraulique.

De manière connue, le frein comporte un étrier apte à supporter et à guider en coulissement deux patins opposés de frottement aptes à coopérer avec un disque tournant.

Le frein décrit et représenté dans ce document comporte :

- un étrier de frein qui comporte un boîtier 12 dans lequel est formée une cavité hydraulique primaire 20 ouverte axialement vers l'avant ;
- un piston primaire 14 qui est monté coulissant axialement de manière étanche dans la cavité hydraulique primaire du boîtier, qui est délimitée axialement vers l'arrière par une paroi transversale de fond du boîtier et dans laquelle le piston primaire délimite axialement une chambre hydraulique primaire, le piston primaire étant apte à coopérer avec un patin associé de frein à disque ;
- une tige de piston 30 qui est mobile axialement avec le piston primaire, qui est immobilisée en rotation par rapport au boîtier, qui traverse de manière étanche la paroi transversale de fond, et qui comporte un tronçon fileté 41 ;
- une roue 60 de blocage axial de la tige de piston, qui est montée vissée, de manière réversible, sur le tronçon fileté de la tige de piston de manière à être est mobile axialement par rapport à la tige de piston, vers l'arrière par vissage ou vers l'avant par dévissage ;
- un moteur électrique commandé 66 apte à entraîner en rotation la roue de blocage ;
- une plaque transversale de butée axiale 50 qui est fixe axialement par rapport au boîtier et qui comporte une face transversale avant de butée 52, la roue de blocage étant mobile axialement, par rapport à la tige de piston 30, entre une position avant et une position arrière de butée dans laquelle la roue de blocage est en appui axial vers l'arrière contre ladite face transversale avant de butée ;
- une cavité intermédiaire qui est agencée axialement à l'arrière de la cavité hydraulique primaire, et qui est délimitée :

-- axialement vers l'avant par la paroi transversale de fond, et axialement vers l'arrière par la plaque transversale de butée ;
-- et radialement par un corps tubulaire intermédiaire qui est rapporté à une extrémité axiale arrière du boîtier ;

- et un couvercle arrière qui est rapporté à une extrémité axiale arrière du corps tubulaire et dans lequel est formée une cavité secondaire qui est délimitée axialement vers l'avant par la plaque transversale de butée ;

frein dans lequel la tige de piston comporte :

--- un tronçon d'extrémité arrière qui s'étend axialement vers l'arrière au-delà de la plaque transversale de butée et qui est centré radialement par rapport au couvercle ;
--- un tronçon de blocage en rotation qui s'étend axialement à travers la plaque transversale de butée ;
--- et un tronçon avant qui s'étend axialement à travers la paroi transversale de fond et qui est centré radialement par rapport à cette paroi transversale de fond ;

Indépendamment de l'actionnement hydraulique principal du frein à disque, celui-ci comporte des moyens de commande pour son actionnement et son fonctionnement en frein de stationnement.

En fonctionnement en frein de stationnement, après la mise en oeuvre de l'actionnement hydraulique, le blocage axial de la tige de piston 30 - et donc du piston 14 par rapport au boîtier 12 - est obtenu par entraînement en rotation de la roue de blocage 60 jusqu'à sa venue axiale en butée arrière contre la face transversale avant de butée 52 de la plaque transversale de butée 50.

Dans ce document, la plaque transversale de butée est réalisée en une seule pièce avec le corps tubulaire intermédiaire, ce qui rend complexe l'assemblage des différents composants, notamment au regard des problèmes de centrage relatif de la tige de piston par rapport à la paroi transversale de fond du boîtier et à la paroi transversale de butée.

La présente invention propose une conception perfectionnée d'un tel type de frein visant à remédier à ces inconvénients.

RESUME DE L'INVENTION

Dans ce but, l'invention propose un frein du type mentionné précédemment, caractérisé en ce que la plaque transversale de butée est conformée en forme générale d'un disque dont une portion périphérique est montée serrée axialement entre deux portions en vis-à-vis de l'extrémité arrière du corps tubulaire et de l'extrémité avant du couvercle, respectivement.

Selon d'autres caractéristiques de l'invention :

- la portion périphérique de la plaque transversale de butée est en forme générale d'une rondelle délimitée axialement par deux facettes transversales annulaires parallèles, avant et arrière, et par une paroi externe cylindrique convexe ;
- la face transversale arrière du corps tubulaire comporte un lamage cylindrique centré qui loge ladite potion périphérique, dont la profondeur axiale est supérieure à l'épaisseur axiale de ladite portion périphérique, et dont le diamètre intérieur est supérieur au diamètre extérieur de ladite portion périphérique ;
- ladite portion périphérique est montée serrée axialement entre le fond arrière du lamage et une portion en vis-à-vis de la face transversale avant du couvercle ;
- ladite portion périphérique délimite, avec le lamage, un logement annulaire périphérique dans lequel est agencé un joint annulaire d'étanchéité qui est monté comprimé axialement entre le fond arrière du lamage et une portion annulaire en vis-à-vis de la face transversale avant du couvercle ;
- le frein comporte des vis axiales de montage et de serrage axial qui s'étendent à travers des perçages associés du corps tubulaire intermédiaire ;
- lesdites vis sont réparties angulairement à la périphérie du corps tubulaire intermédiaire ;
- le frein comporte un piston secondaire qui est monté coulissant axialement de manière étanche dans ladite cavité hydraulique secondaire qui est une cavité hydraulique dans laquelle il délimite une chambre hydraulique secondaire, et qui est apte à coopérer avec la tige de piston pour exercer sur cette dernière un effort secondaire de poussée axiale, d'arrière en avant, lorsque la chambre hydraulique secondaire est alimentée en fluide sous pression ;
- le tronçon d'extrémité axiale arrière de la tige de piston est guidé en coulissement axial étanche à travers le piston secondaire.

BREVE DESCRIPTION DES FIGURES

D'autres caractéristiques et avantages de l'invention apparaîtront à la lecture de la description détaillée qui va suivre d'un exemple de réalisation de l'invention pour laquelle on se reportera aux dessins annexés dans lesquels :

- la figure 1 est une vue générale en perspective d'un exemple de réalisation d'un frein à disque à frein de stationnement selon l'invention ;
- la figure 2 est une vue en perspective, analogue à celle de la figure 1, selon un autre angle de vue, et sur laquelle une portion de la partie arrière de l'ensemble est représentée avec arrachement partiel selon un plan transversal et vertical ;
- la figure 3 est une vue du frein de la figure 1, en coupe selon un plan axial vertical, sur laquelle certains composants ont été omis ;

- la figure 4 est une vue de détail à plus grande échelle qui illustre le moteur électrique et les composants du mécanisme de transmission agencés dans une partie correspondante du corps tubulaire intermédiaire du frein représenté aux figures 1 et 2 ;
- la figure 5 est une vue de détail, à plus grande échelle, en perspective et en section selon un plan axial et vertical des principaux composants de la partie arrière du frein de la figure 1 ;
- la figure 6 est une vue de détail en perspective, selon un autre angle de vue, illustrant certains des éléments de la figure 5 ;
- la figure 7 est une vue axiale en bout depuis l'avant de la plaque transversale de butée axiale ;
- la figure 8 est une vue en section axiale et verticale du frein de la figure 1, qui est représenté dans un premier état, en fonctionnement en frein de service ;
- la figure 9A est une vue analogue à celle de la figure 8, qui représente le frein dans un deuxième état, en fonctionnement de frein de stationnement ;
- la figure 9B est une vue schématique de détail illustrant les principaux composants des moyens de blocage de la tige de piston ;
- les figures 10A et 10B sont des vues analogues à celles des figures 9A et 9B, correspondant à un troisième état, en frein de stationnement installé ;
- la figure 11 est une vue de détail, à plus grande échelle, en perspective et en section selon un plan axial longitudinal et vertical des principaux composants de la partie avant du frein de la figure 1, et notamment des composants du groupe de rattrapage automatique d'usure agencé dans la cavité primaire ;

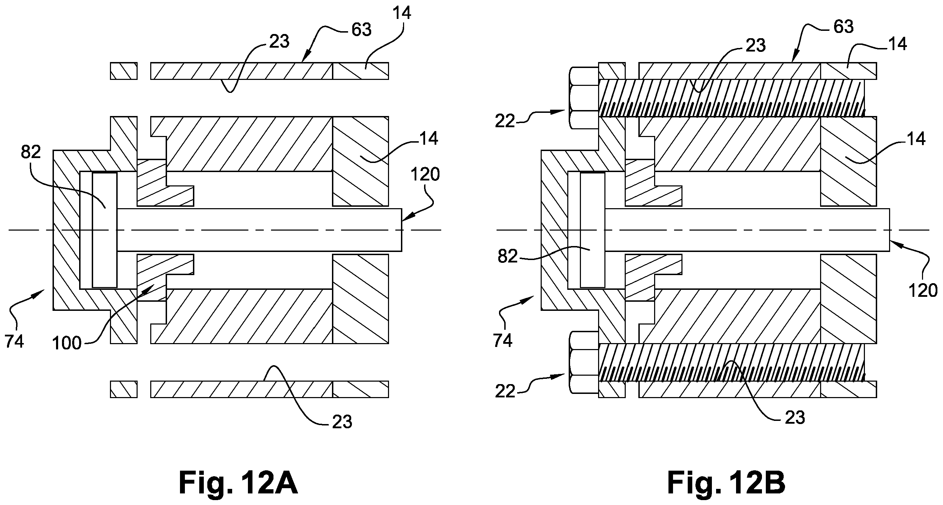

- les figures 12A et 12B sont deux vues schématiques illustrant le montage et la fixation de la plaque transversale de butée ;
- les figures 13A et 13B sont deux vues en perspective, selon deux angles de vue opposés, qui illustrent la coopération de la tige de piston avec la plaque transversale de butée ;
- la figure 14A est une vue en section par un plan transversal, qui illustre la coopération de la tige de piston avec la plaque transversale de butée ;
- les figures 14B à 14E sont des vues analogues à celle de la figure 14A qui illustrent quatre variantes de réalisation de la liaison cannelée entre la tige de piston et la plaque transversale de butée ;
- les figures 15A, 15B et 15C sont trois vues schématiques en perspective des composants illustrés à la figure 16A ;
- les figures 16A, 16B et 16C sont des vues schématiques illustrant certains principaux composants du frein illustré sur les figures précédentes permettant d'en expliquer certains aspects de fonctionnement.

DESCRIPTION DETAILLEE DES FIGURES

Dans la description qui va suivre, des éléments et composants identiques, analogues ou similaires seront désignés par les mêmes références.

Dans la description qui va suivre, en référence au trièdre (L, V, T) représenté sur les figures et à titre non limitatif sans référence à la gravité terrestre, on utilisera les termes longitudinal, vertical, transversal, etc.

On a représenté sur les figures un étrier 12, d'un frein à disque de conception générale connue, qui est représenté ici sans ses patins de frein, ni sans les moyens associés de guidage en coulissement axial et de rappel de ces patins.

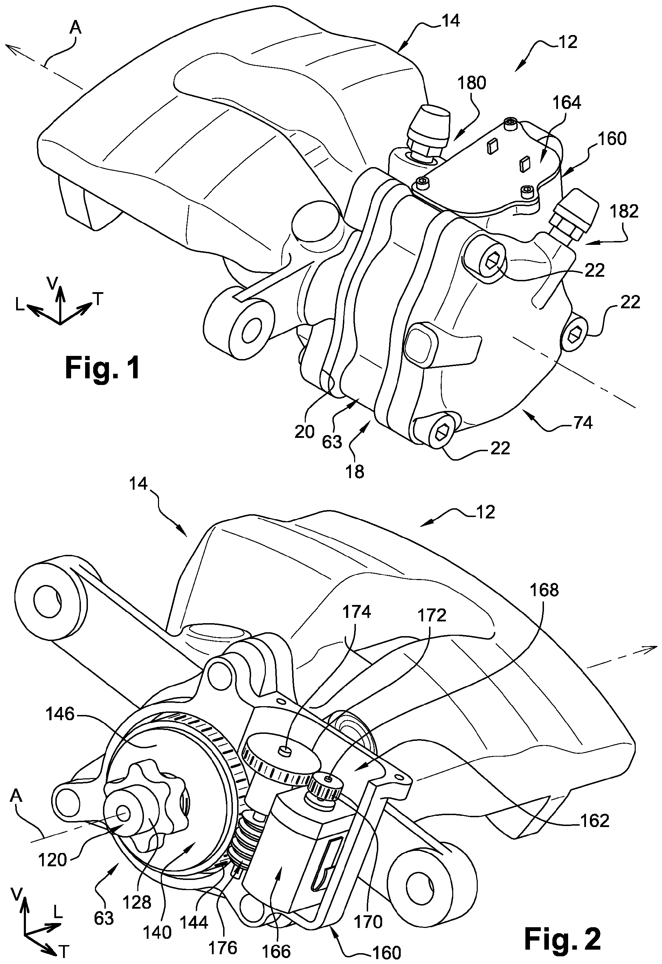

L'étrier 12 est constitué pour l'essentiel d'un boîtier avant 14, ou corps de l'étrier, dans lequel un piston primaire 16 est monté coulissant axialement d'arrière en avant, c'est-à-dire de la gauche vers la droite en considérant la figure 1, selon un axe A correspondant à l'orientation longitudinale L des figures.

L'étrier comporte, à l'arrière du boîtier, un groupe 18, d'actionnement hydraulique secondaire qui est rapporté et fixé sur une face transversale arrière 20 du boîtier 14 de l'étrier 12, au moyen de vis axiales 22 montées visées dans des trous taraudés du boîtier 14.

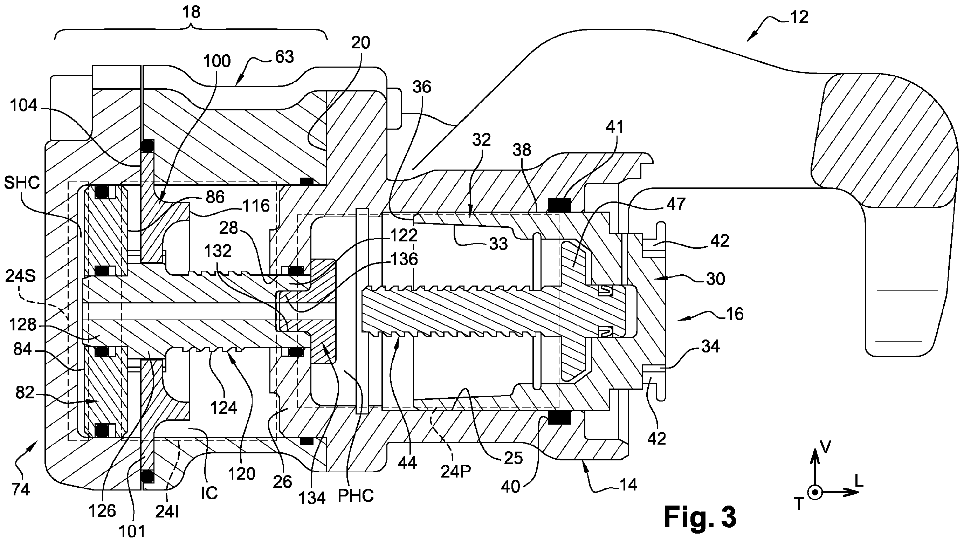

Comme on peut le voir notamment aux figures 3 et 8 à 10A, le boîtier 14 est une partie moulée en fonderie, par exemple en alliage léger, qui délimite une cavité axiale hydraulique primaire 24P dans un alésage usiné 25 de laquelle le piston primaire 16 est monté coulissant axialement et de manière étanche dans les deux sens, selon l'axe A.

La cavité hydraulique primaire 24P est délimitée axialement vers l'arrière par une paroi transversale de fond 26 d'orientation radiale qui est percée centralement par un trou axial débouchant 28.

La cavité hydraulique primaire 24P et l'alésage 25 sont ouverts axialement vers l'avant, selon l'axe longitudinal A, de telle manière que le piston primaire 16 fait saillie axialement hors du boîtier 14 pour coopérer, de manière connue, avec un patin de frein associé non représenté.

A cet effet, le piston de frein primaire 16 est une pièce en forme générale de pot cylindrique qui comporte une paroi transversale avant 30, d'orientation radiale qui se prolonge axialement vers l'arrière par une paroi latérale cylindrique tubulaire 32.

La paroi transversale avant 30 est délimitée par une face transversale externe 34 avant qui est apte à coopérer avec le patin de frein à disque associé (non représenté).

La paroi latérale cylindrique tubulaire 32 du piston 16 est délimitée axialement vers l'arrière par une face transversal annulaire arrière 36.

La paroi latérale, radialement externe cylindrique convexe 38, du piston primaire 16 est guidée en coulissement axial dans l'alésage 25 de la cavité hydraulique primaire 24P et l'étanchéité est assurée au moyen d'un joint annulaire 41 qui est reçu dans une gorge radiale 40, par exemple à section carrée ou rectangulaire, de l'alésage 25.

Des moyens d'immobilisation en rotation du piston primaire 16, par rapport à l'étrier 12, et donc par rapport au boîtier 14, comportent ici - de manière connue - des encoches 42 formées dans la face transversale externe avant 34 du piston primaire 16 qui coopèrent avec des moyens complémentaires (non représentés) du patin de frein associé, de telle manière que le piston primaire 16 ne peut pas tourner autour de son axe principal de coulissement axial A.

Le piston primaire 16 délimite une chambre hydraulique primaire PHC située dans la cavité hydraulique primaire 24P, à l'arrière du piston primaire 16.

De manière connue, l'alimentation en fluide sous pression, et notamment en fluide hydraulique sous pression, de la chambre hydraulique primaire PHC provoque un actionnement hydraulique, dit de service, du frein par poussée axiale vers l'avant du piston primaire 16 par rapport au boîtier 14 de l'étrier 12.

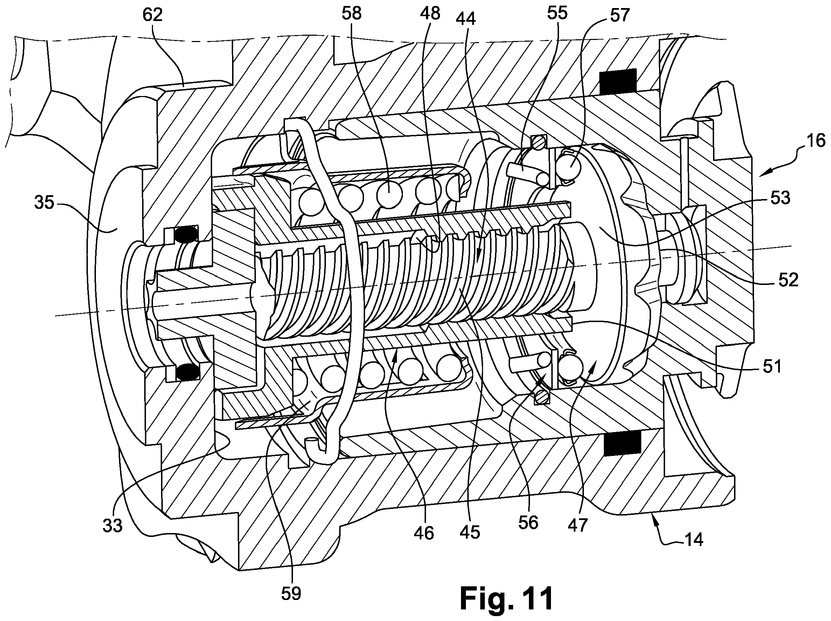

De manière connue, la cavité hydraulique primaire 24P loge un groupe 43, de type vis-écrou, illustré à grande échelle à la figure 11, qui assure une fonction de rattrapage automatique d'usure des garnitures de friction équipant les patins de frein (non représentés).

On ne décrira ici que les composants principaux de ce groupe de manière générale et leur association ou coopération avec d'autres éléments et composants du frein.

Le groupe de rattrapage automatique d'usure 43 comporte à l'avant une vis 44 de rattrapage et, à l'arrière, un écrou 46 de rattrapage.

L'écrou de rattrapage 46 est de forme générale tubulaire et il est traversé axialement et centralement par un perçage taraudé 48.

L'écrou 46 est délimité axialement vers l'arrière par un tronçon axial d'extrémité arrière en forme d'une collerette axiale annulaire 50 de plus grand diamètre et, axialement vers l'avant, par une face annulaire transversale d'extrémité avant 51.

La vis de rattrapage 44 comporte un corps principal 45 fileté extérieurement qui est monté vissé, de manière réversible, dans le taraudage 48 de l'écrou de rattrapage 46.

Le corps principal fileté 45 de la vis de rattrapage 44 se prolonge axialement vers l'avant par une tête élargie radialement 47 qui est délimitée par une face transversale avant 52, par une face transversale arrière 51, et par une face latérale périphérique 53 de poussée qui présente un profil convexe de révolution, en tronc de cône ou en tronc de sphère.

Cette face latérale de poussée 53 de la vis de rattrapage 46 est apte à coopérer avec une portion interne en vis-à-vis complémentaire 54 du piston primaire 16 centrée sur l'axe A.

La tête 47 de la vis de rattrapage 46 est maintenue axialement en appui vers l'avant, et en permanence de manière à assurer, sans jeu axial, la coopération des formes mentionnées précédemment - et ainsi une liaison sans jeu axial de la vis 46 par rapport au piston primaire 16, au moyen d'un ensemble 56 à action élastique.

L'ensemble 56 comporte un élément formant ressort 55 et une butée axiale à billes 57, qui coopère avec la face transversale arrière 51 de la tête 47 et qui permet la rotation de la tête 47.

La vis de rattrapage 46 forme ainsi, avec le piston primaire 16, un équipage solidaire mobile axialement par rapport au boîtier 14.

De manière connue, pour assurer la fonction de rattrapage automatique de l'usure, il est prévu un ressort de rattrapage d'usure 58.

Le ressort 58 est ici un ressort à boudin qui est monté comprimé axialement dans une cage 59, et qui sollicite en permanence l'écrou de rattrapage 46, en agissant sur la collerette arrière 50, axialement vers l'arrière de manière à tendre à provoquer en permanence un "allongement" de la longueur axiale totale du groupe vis de rattrapage 44 - écrou de rattrapage 46.

A cet effet, le ressort de rattrapage automatique d'usure 58 coopère avec l'écrou de rattrapage 46 qui est immobilisé en rotation autour de l'axe A, d'une manière qui sera décrite par la suite.

Axialement vers l'arrière, au-delà de sa face transversale arrière 20, le boîtier 14 de l'étrier 12 se prolonge par un tronçon tubulaire court 60 qui est délimité radialement vers l'extérieur par une surface cylindrique convexe 62.

La partie arrière du boîtier 14 est équipée d'un corps tubulaire intermédiaire 63 qui est rapporté sur le corps 14 de l'étrier 12.

A cet effet, le corps tubulaire 63 comporte un alésage interne 64 qui est centré et monté de manière étanche sur la surface 62 du tronçon tubulaire court 60 du boîtier 14.

Le tronçon tubulaire 63 est délimité axialement vers l'avant par une face transversale avant 66 qui est en appui axial contre la face transversale d'extrémité arrière 20 du corps 14.

Le corps tubulaire 63 est délimité axialement vers l'arrière par une face transversale arrière 68 dans laquelle est formé un lamage 70 axial centré qui est délimité par une facette transversale arrière 71 et par une surface périphérique axiale cylindrique concave 72.

Le frein comporte encore, rapporté axialement à l'arrière du corps tubulaire intermédiaire 63, un couvercle arrière 74 en forme générale de pot cylindrique ouvert vers l'avant qui est délimité par sa face transversale avant 76 qui est en appui axial contre la face transversale arrière 68 du corps tubulaire intermédiaire 63.

Le couvercle arrière 74 comporte un alésage interne borgne 78 qui est ouvert axialement vers l'avant et qui est fermé vers l'arrière par une paroi transversale arrière de fond 80 du couvercle arrière 74.

Un piston hydraulique secondaire 82 est monté coulissant axialement de manière étanche dans l'alésage 78 du couvercle arrière 74 dans lequel il délimite ainsi une chambre hydraulique secondaire 24S formée dans une cavité hydraulique secondaire SHC formée dans le fond du couvercle arrière 74.

Le piston secondaire 82 est délimité axialement vers l'arrière par une face transversale arrière 84 et axialement vers l'avant par une face transversale avant 86.

L'étanchéité radiale extérieure du piston secondaire 82 par rapport à l'alésage 78 est assurée au moyen d'un joint d'étanchéité 89 qui est monté dans une gorge radiale interne 88 du piston secondaire 82.

Le piston secondaire 82 comporte encore un perçage axial interne et central débouchant 90 dans lequel est formée une gorge radiale interne 92 qui reçoit un joint annulaire d'étanchéité 93.

Le frein comporte une plaque transversale 100, dite de butée, en forme générale de disque et dont une portion périphérique 101, radialement extérieure, en forme générale de rondelle annulaire, est délimitée par une paroi cylindrique convexe 102 et par deux faces transversales parallèles et opposées arrière 104 et avant 106.

Cette portion périphérique 101, radialement extérieure, est reçue, avec jeu radial, dans le lamage 70 et elle est montée serrée axialement entre la face transversale arrière 71 du lamage 70 et une portion en vis-à-vis de la face transversale avant 76 du couvercle arrière 74.

L'épaisseur axiale « e » de la portion périphérique 101 est supérieure à la profondeur axiale « p » du lamage 70.

L'assemblage et la fixation du couvercle arrière 74, du corps tubulaire intermédiaire 63 et le serrage de la potion périphérique 101 de la plaque transversale de butée 100 est ici assuré au moyen des trois vis 22 qui sont réparties angulairement de manière régulière à la périphérie du corps tubulaire 63, et qui s'étendent à travers des perçages axiaux lisses 23 du corps tubulaires 63.

A l'issue du serrage des vis 22, la plaque transversale de butée est immobilisée par rapport au corps tubulaire 63, et donc par rapport au boîtier 14, axialement et radialement, du fait du serrage axial de de sa portion périphérique 101 entre les faces opposées 71 et 76.

Le diamètre externe de la portion périphérique 101 de la plaque de butée 100 est inférieur au diamètre interne de la paroi interne concave 72 du lamage 70 de manière à délimiter un logement qui reçoit un joint annulaire d'étanchéité 110 qui, après le serrage des vis 22, est monté comprimé axialement.

La plaque transversale de butée 100 comporte un trou central débouchant axialement 112 et elle comporte, sur sa face transversale avant, une collerette axiale de butée 114 qui s'étend axialement en saillie par rapport au plan de la face transversale 106 et qui est délimitée axialement par une face transversale annulaire avant de butée 116.

Le frein comporte une tige de piston 120 centrale, aussi appelée arbre principal, qui comporte un premier tronçon d'extrémité avant 122 qui est reçu en coulissement axial, de manière étanche, dans le perçage central 28 de la paroi transversale de fond 26 du boîtier 14, avec interposition d'un joint annulaire d'étanchéité 31 monté dans une gorge 29 formée dans le perçage 28.

La tige de piston 120 se prolonge axialement vers l'arrière par un tronçon central fileté 124, puis par un tronçon intermédiaire 126 de blocage en rotation de la tige de piston 120 par rapport à la plaque transversale de butée 100.

Comme on peut le voir sur les figures, le profil extérieur convexe du tronçon de blocage 126 n'est pas de révolution, mais il est de forme complexe - ici cannelée - et complémentaire du profil interne du trou central 112 de la plaque transversale de butée 100, de manière à immobiliser le tronçon 126, et donc la tige de piston 120, en rotation par rapport à la plaque transversale de butée 100, et donc par rapport au boîtier 14.

Plus précisément, le tronçon de blocage 126 de la tige de piston 120 est un tronçon de plus grand diamètre cannelé extérieurement.

Il comporte ici six cannelures, ou rainures, axiales 200 qui sont réparties angulairement de manière régulière.

En section par un plan radial, chaque cannelure 200 présente un profil arrondi concave en arc de cercle dont le rayon est R1.

Les cannelures 200 sont séparées par des six arêtes, ou listels, axiales 202.

En section par un plan radial, chaque arête 202 présente un profil arrondi convexe en arc de cercle, en forme général de lobe, dont le rayon est R2.

Chaque cannelure 200 est délimité par une génératrice axiale de fond 204 et par deux génératrices axiales 206. Les génératrices axiales 206 sont situées sur un diamètre D1.

Chaque arête 202 est délimitée par une génératrice axiale de sommet 208 et par deux génératrices axiales 206.

De manière complémentaire, avec un léger jeu permettant un coulissement axial relatif des deux pièces, le trou central 112 de la plaque transversale de butée 100 est cannelé intérieurement.

Il comporte ici six cannelures, ou rainures, axiales 210 qui sont réparties angulairement de manière régulière.

En section par un plan radial, chaque cannelure 210 présente un profil arrondi concave en arc de cercle complémentaire de celui d'une arête 202.

Chaque cannelure 210 est délimité par une génératrice axiale de fond 214 qui sont situées sur un diamètre D2.

Les cannelures 210 sont séparées par des six arêtes, ou listels, axiales 212.

En section par un plan radial, chaque arête 212 présente un profil arrondi convexe en arc de cercle complémentaire de celui d'une cannelure 200.

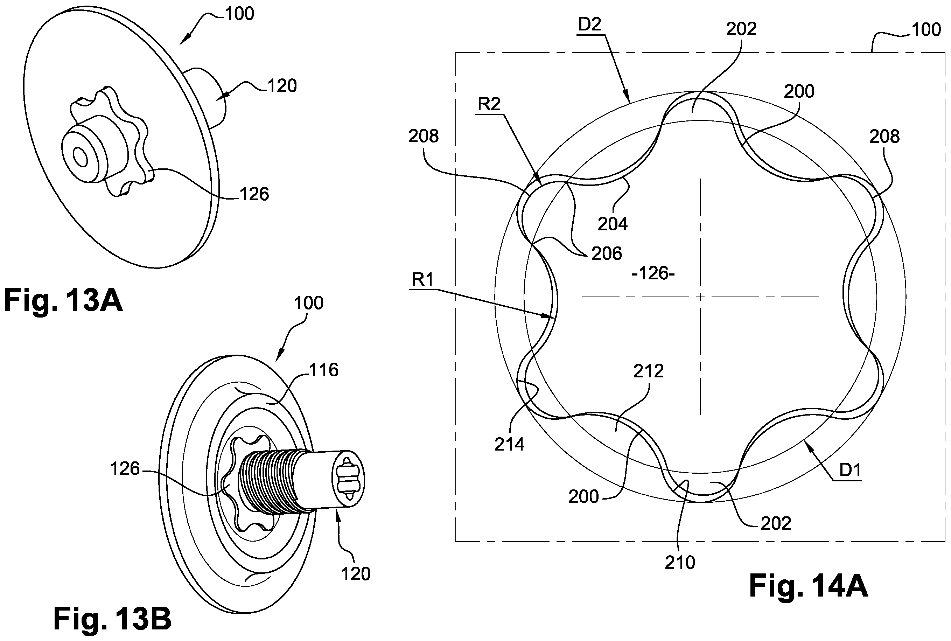

A titre d'exemple, en se référant à la figure 14A, dans le cas d'un tronçon à six cannelures 200 et six arêtes 202,

$$D1 = 0{,}87 \times D2 \text{ et } R1 = 2{,}5 \times R2$$

Cette conception et ce profil des deux parties cannelées permet d'avoir (en section) de trois à sept points de contact (soit trois à sept génératrices axiales de contact) entre la pièce femelle 100-112 et la pièce mâle 120-126, afin de diminuer les pressions de contact en chaque point, de réduire le phénomène de matage des pièces au fur et à mesure de leur utilisation, et de pouvoir ainsi continuer à maîtriser le jeu angulaire entre les pièces. De même, en éloignant radialement les points de contact de l'axe central A, on favorise la réduction du matage entre les pièces.

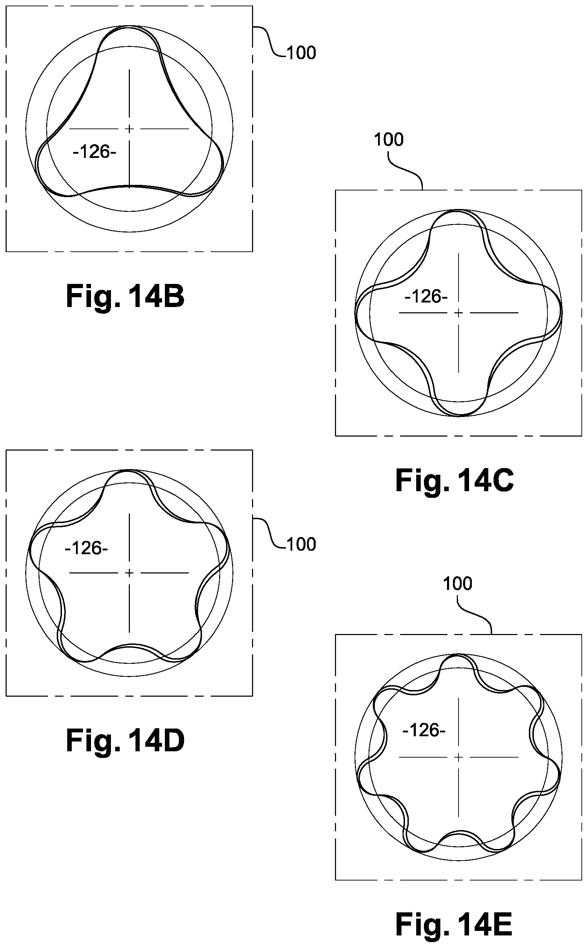

On a représenté aux figures 14B à 14E quatre variantes de conception des deux pièces cannelées complémentaires.

A la figure 14B, il y a trois cannelures 202 et D1 = 0,80 X D2 et R1 = 5,0 X R2
A la figure 14C, il y a quatre cannelures 202 et D1 = 0,85 X D2 et R1 = 2,0 X R2
A la figure 14D, il y a cinq cannelures 202 et D1 = 0,87 X D2 et R1 = 2,0 X R2
A la figure 14E, il y a sept cannelures 202 et D1 = 0,87 X D2 et R1 = 2,5 X R2

La mise en oeuvre de cette conception, de l'arrêt en rotation de la tige de piston 120 par rapport à la plaque transversale de butée 100, n'est pas limitée à une plaque transversale de butée rapportée, mais elle peut aussi être utilisée si la plaque transversale de butée est réalisée en une seule pièce avec le corps tubulaire 63.

De même, cette conception n'est pas limitée au cas d'un ensemble à deux chambres hydrauliques, mais elle peut être mise en oeuvre dans le cas d'un frein ne comportant qu'une seule chambre hydraulique « primaire » ou principale.

Par ailleurs, le tronçon de blocage 126 est monté coulissant axialement dans le trou central 112.

Enfin, la tige de piston 120 comporte un tronçon axial d'extrémité arrière 128, analogue au tronçon axial d'extrémité avant 122, qui est monté coulissant axialement de manière étanche dans le trou central 90 du piston secondaire 82.

Du fait des étanchéités assurées au niveau du tronçon axial d'extrémité avant 122 et du tronçon axial d'extrémité arrière 128, par rapport à la paroi transversale de fond 26 et au piston secondaire 82 respectivement, cette conception assure l'étanchéité de la chambre hydraulique secondaire SHC formée dans la cavité hydraulique secondaire 24S.

L'ensemble comporte une cavité intermédiaire IC, non hydraulique, qui est délimitée axialement vers l'arrière et de manière étanche par le piston secondaire 82, et axialement vers l'avant et de manière étanche par la paroi transversale de fond 26 du boîtier 14.

L'ensemble délimite ainsi une chambre intermédiaire 24I qui, comme cela sera expliqué par la suite, n'est pas alimentée en fluide hydraulique, et est une chambre dite "à l'air".

Pour assurer la communication hydraulique entre la chambre hydraulique principale 24P et la chambre hydraulique secondaire 24S, la tige de piston 120 comporte un perçage axial central débouchant 130.

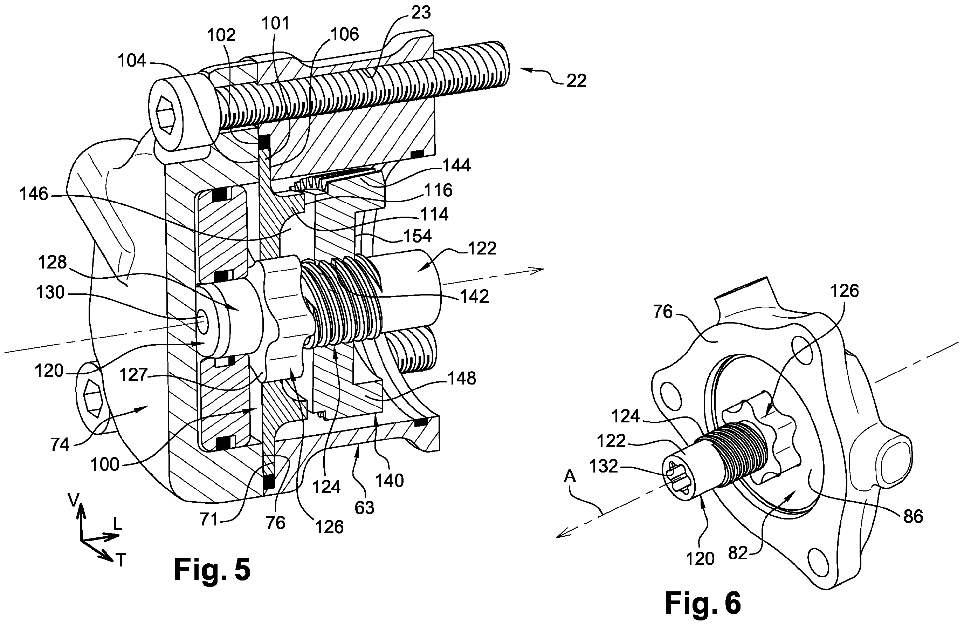

Comme on peut le voir notamment à la figure 6, le tronçon d'extrémité axiale avant 132 du perçage central 130 est d'un diamètre plus grand et il présente un profil intérieur concave non de révolution 132.

Le tronçon axial d'extrémité avant 122 de la tige de piston 120, avec sa conformation interne non de révolution, s'étend axialement vers l'avant à travers la paroi transversale de fond 26 du boîtier 14, et axialement au-delà de la face transversale arrière de fond 33 de l'alésage 25 du boîtier 14 de manière à assurer sa coopération avec l'écrou de rattrapage 46.

Le tronçon axial d'extrémité arrière en forme de collerette annulaire 50 de la vis de rattrapage 46 loge un poussoir central 134 qui est fixé et centré dans la collerette et qui se prolonge axialement vers l'arrière par un tronçon axial arrière 136 de diamètre réduit et de profil non de révolution complémentaire du profil interne du tronçon 132 complémentaire de la partie avant de la tige de piston 120.

Le tronçon 136 est reçu dans le tronçon 132, avec une possibilité de coulissement axial par rapport au tronçon axial d'extrémité avant 122 en permettant ainsi une possibilité de déplacement axial relatif de l'écrou de rattrapage 46 par rapport à la tige de piston 120.

Le poussoir central 134 est, comme la tige de piston 120, percé axialement par un perçage axial débouchant 138 qui prolonge le perçage 130 en mettant ainsi en communication hydraulique la chambre hydraulique secondaire 24S avec la chambre hydraulique primaire 24P, via l'interface entre le filetage de la vis de rattrapage 44 et le taraudage de l'écrou de rattrapage 46.

Dans la mesure où, comme cela a été expliqué précédemment, la tige de piston 120 est immobilisée en rotation par rapport au boîtier 14, la liaison en rotation entre la tige de piston 120 et l'écrou de rattrapage 46 assure l'immobilisation en rotation de l'écrou de rattrapage 46 par rapport au boîtier 14, pour permettre le fonctionnement du groupe 43 de rattrapage automatique d'usure.

Le frein comporte encore une roue de blocage 140 qui est montée vissée sur le tronçon central fileté 124 de la tige de piston 120, par l'intermédiaire de son trou central taraudé 142.

La roue de blocage 140 est ainsi montée vissée de manière réversible sur le tronçon central fileté 124 de la tige de piston 120, et la roue de blocage 120 est apte à se déplacer axialement, par vissage ou par dévissage, le long du tronçon central fileté 124, dans les deux sens.

Ce déplacement s'effectue à l'intérieur de la chambre intermédiaire IC.

La roue de blocage 140 comporte une périphérie radiale externe dentée 144.

La roue de blocage 140 est aussi délimitée par une face transversale arrière 146, tandis qu'elle comporte une collerette 148 qui s'étend axialement vers l'avant et qui est délimitée par une face transversale annulaire avant 150.

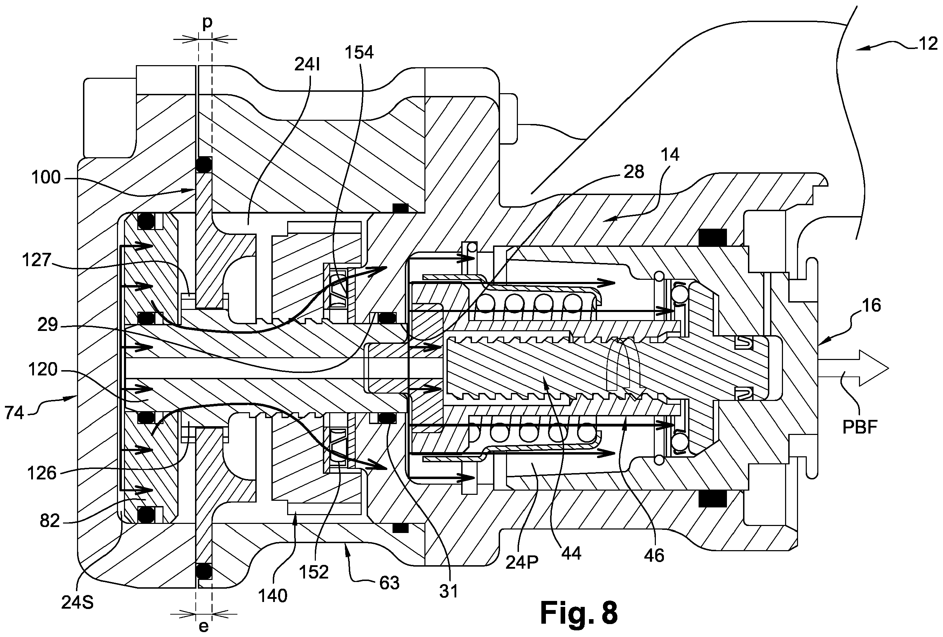

Une butée axiale à rouleaux 152 est logée à l'intérieur de la collerette 148 et, dans la position illustrée à la figure 8, elle constitue une butée axiale définissant la position maximale avant de la roue de blocage 140 en butée contre la face transversale arrière 35 de la paroi transversale de fond 26, la butée à rouleaux 152 coopérant d'autre part avec une face transversale avant 154 de la roue de blocage 140.

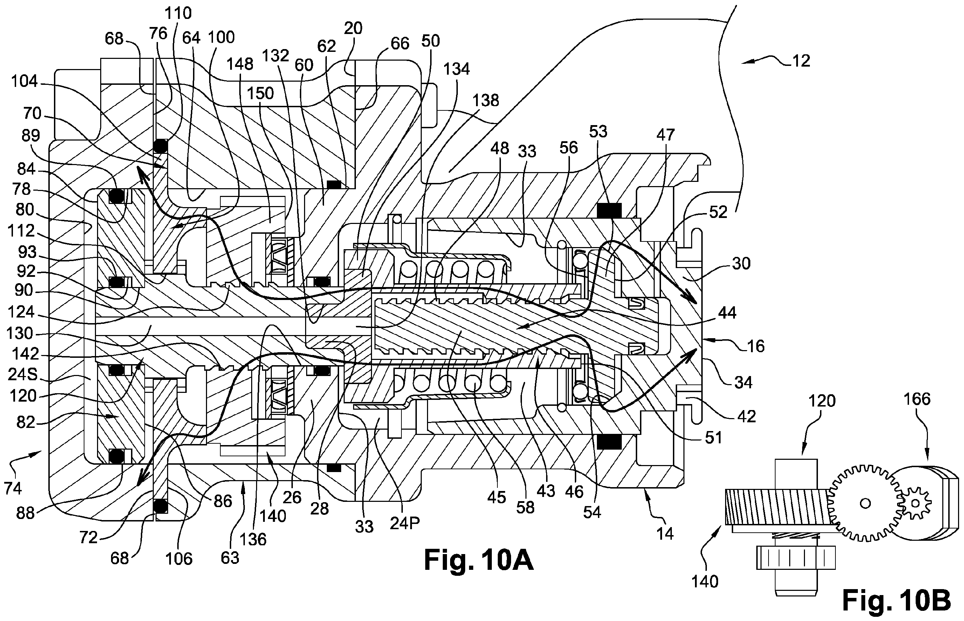

Par ailleurs, la face transversale arrière 146 s'étend en regard de la face transversale annulaire avant de butée 116 de la plaque transversale de butée 100 pour, en position axiale maximale arrière de butée de la roue de blocage 140, venir en butée axiale contre celle-ci, comme cela est illustrée à la figure 10A.

Comme on peut le voir notamment aux figures 1 et 2, le tronçon tubulaire central 63 comporte une extension latérale transversale 160 qui délimite un logement intérieur 162, de forme générale parallélépipédique rectangle, qui communique radialement avec la chambre intermédiaire IC dans laquelle est logée la roue de blocage 140. Le logement 162 est fermé par un capot 164 monté vissé.

Le logement 162 loge un ensemble motoréducteur pour l'entraînement en rotation et pour le blocage en rotation de la roue de blocage 140.

Cet ensemble comporte un moteur électrique 166, dont l'arbre de sortie 168, ici d'orientation verticale selon l'axe V, est lié en rotation à un pignon de sortie 170 qui engrène en permanence avec un pignon 172 de plus grand diamètre.

Le pignon 172 est lié en rotation à une extrémité axiale d'un axe vertical d'entraînement 174 qui est lui-même guidé et monté librement à rotation dans le logement 162.

L'axe 174 est ainsi apte à être entrainé en rotation dans les deux sens, avec réduction du régime de rotation, par l'arbre de sortie 168 du moteur électrique 166, en fonction de l'alimentation électrique de ce dernier.

L'axe 174 est aussi apte à être bloqué en rotation lorsque l'arbre 168 de sortie du moteur électrique 166 ne tourne pas.

L'axe 174 porte et est lié en rotation à une vis sans fin d'entraînement 176, ici réalisée en une seule pièce avec l'arbre 174, dont le filetage fait saillie, selon la direction transversale, radialement à l'intérieur de la chambre intermédiaire IC pour engrener et coopérer en permanence avec la périphérie dentée 144 de la roue de blocage 140.

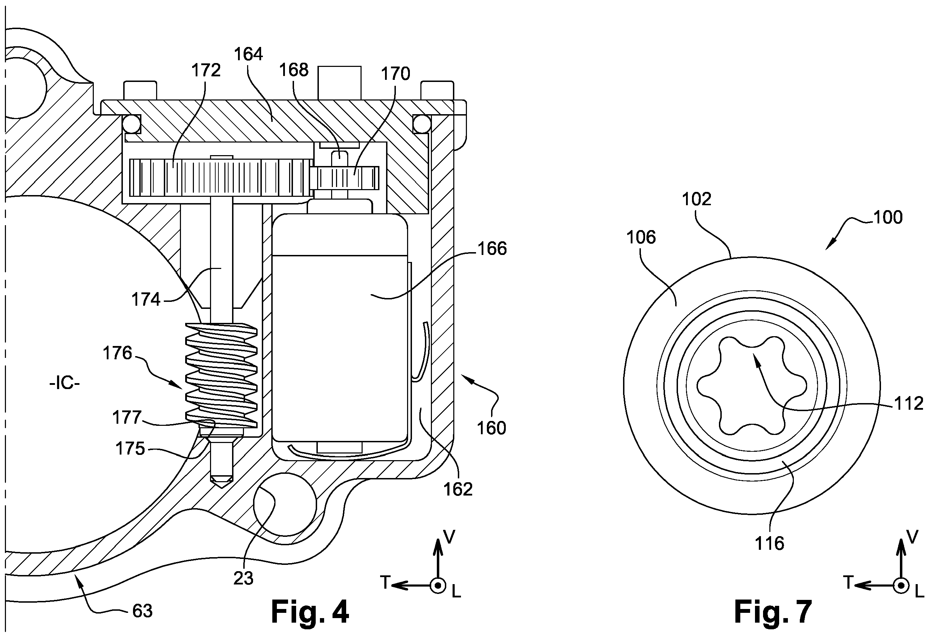

Comme on peut le voir notamment sur les figures 2 et 4, le dimensionnement et le positionnement relatif de la périphérie dentée 144 de la roue de blocage 140 et de la vis d'entraînement 176 sont tels que ces deux composants sont en permanence en engrènement, et ceci quelle que soit la position axiale de la roue de blocage 140.

Au-delà de sa structure classique d'ensemble motoréducteur, la caractéristique principale de la liaison entre la vis sans fin 176 et la roue dentée de blocage 140 est son caractère non réversible, c'est-à-dire que tout déplacement axial de la tige de piston 120 par rapport au boîtier 14 est impossible si le moteur électrique ne tourne pas, c'est-à-dire si la roue de blocage 140 est immobilisée en rotation par cette liaison non réversible.

Pour l'alimentation en fluide hydraulique sous pression, par une source de fluide sous pression (non représentée) telle qu'une pompe et/ou un maître-cylindre de freinage, le boîtier 14 de l'étrier 12 comporte un raccord hydraulique 180 qui communique avec la chambre hydraulique primaire 24P, tandis que le couvercle arrière 74 comporte lui aussi un raccord hydraulique 182 qui peut être utilisé de la même manière, ou comme vis de purge, ces deux fonctions pouvant être inversées entre les deux raccords.

Dans la position illustrée à la figure 8, dans laquelle la roue de blocage 140 est dans sa position axiale extrême avant, en l'absence d'alimentation électrique du moteur électrique 166, en utilisation de freinage de service, la roue de blocage 140 est bloquée en rotation par le moteur 166 et la vis sans fin 176.

Lorsque la pression hydraulique de service est établie simultanément dans les deux chambres hydrauliques primaire 24P et secondaire 24S, le piston primaire 16 est sollicité axialement vers l'avant pour appliquer un effort primaire de freinage PBF au patin de frein associé.

Par contre, la pression établie simultanément dans la chambre hydraulique secondaire SHC, qui agit sur la face arrière 84 du piston secondaire 82, ne transmet aucun effort de freinage supplémentaire au patin de frein sur lequel agit le piston primaire 16.

En effet, sous l'effet de la pression, le piston secondaire se déplace axialement vers l'avant jusqu'à ce que sa face transversale avant 86 vienne en butée axiale contre une face transversale arrière 127 en vis à vis du tronçon de blocage 126 de la tige de piston 120, mais le piston secondaire 82 ne peut pas provoquer de déplacement axial de la tige de piston 120 vers l'avant, puisque cette dernière est empêchée, par la roue de blocage 140, de se déplacer axialement par rapport au boîtier 14.

Les efforts mécaniques axiaux, orientés vers l'avant, exercés par le piston secondaire 82 sont repris par le boîtier 14, à travers la tige de piston 120, la roue de blocage 140 et la butée axiale à rouleaux 152.

Ces efforts sont aussi repris ou encaissés par la vis sans fin d'entraînement 176 en bout de son axe 174, à son autre extrémité 175 (voir figure 4) de forme tronconique convexe qui est en appui axial sur une portée tronconique concave complémentaire 177 du logement 162 du corps tubulaire 163.

De manière connue, lorsque l'on supprime la pression hydraulique d'actionnement de service, le piston primaire 16 recule légèrement vers l'arrière sous l'action du patin de frein associé, avec intervention éventuelle du groupe 43 de rattrapage automatique d'usure.

Pour provoquer la mise en oeuvre du frein de stationnement, il est nécessaire, comme précédemment, d'alimenter simultanément les deux chambres hydraulique primaire 24P et secondaire 24S, et de "libérer" la tige de piston 120 pour que, dans un premier temps et sous l'action du piston secondaire 82, la tige de piston - par l'intermédiaire du poussoir 134 - applique un effort axial à l'écrou de rattrapage 46, et donc à la vis de rattrapage 44, et donc au piston primaire 16.

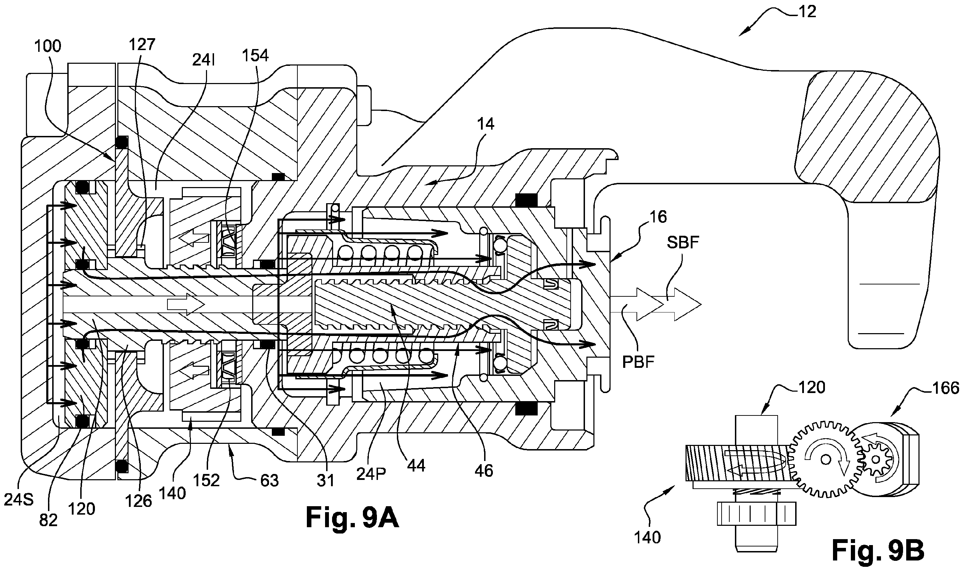

On obtient ainsi, comme on peut le voir à la figure 9A, l'application de l'effort de freinage primaire PBF, ou effort de freinage de service, et l'application d'un effort supplémentaire de freinage secondaire SBF de stationnement.

A cet effet, et comme cela est représenté schématiquement à la figure 9B, le moteur électrique 166 est alimenté et son arbre de sortie 168 est entraîné en rotation pour entrainer en rotation la roue dentée de blocage 140 dans le sens correspondant à son déplacement axial, de la droite vers la gauche, en considérant la figure 9A.

La vis sans fin d'entraînement 176 entraîne la roue dentée de blocage 140 qui, en combinaison avec le piston secondaire 82, permet et déplacement ou translation axiale de la tige de piston 120 de la gauche vers la droite pour que la tige de piston 120, comme cela a été expliqué ci-dessus, agisse alors indirectement sur le piston primaire 16.

Un effort total de freinage correspondant à l'effort total de freinage de stationnement PBF + SBF est alors appliqué au piston primaire 16.

Selon un principe connu, il est nécessaire de maintenir cet effort de freinage de stationnement appliqué, après relâchement du freinage hydraulique, c'est-à-dire après suppression de la pression hydraulique dans les deux chambres hydrauliques primaire 24P et secondaire 24S.

Ceci est obtenu par l'intermédiaire de la roue de blocage 140 qui, sous l'action du moteur électrique 166, a atteint sa position axiale arrière de butée illustrée à la figure 10A dans laquelle la roue de blocage 140 est en butée axiale vers l'arrière contre la face annulaire de butée 116 de la plaque transversale de bute 100.

Lorsque la pression hydraulique est supprimée et que l'alimentation du moteur électrique est interrompue, l'ensemble est dans l'état mécanique illustré à la figure 10A.

La roue dentée de blocage 140 est bloquée en rotation du fait des efforts de frottement à l'interface avec la face annulaire de butée 116.

La roue dentée de blocage 140 est aussi bloquée en rotation du fait du caractère non réversible de la liaison assurée par la vis d'entraînement sans fin 176 et de la reprise des efforts au niveau de son axe (174, 175 et 177) comme mentionné précédemment.

Comme on peut le voir à la figure 10A, les efforts axiaux correspondant à l'effort total de freinage de stationnement appliqué au piston primaire 16, sont repris par le boîtier 14 à travers la vis de rattrapage 44, l'écrou de rattrapage 46, le poussoir 134, la tige de piston 120, la roue dentée de blocage 140, la plaque transversale de butée 100, le couvercle arrière 74, et les vis 22.

Pour relâcher l'effort de freinage de stationnement, en partant de la position représentée à la figure 10A, on établit à nouveau la pression hydraulique simultanément dans les deux chambres hydrauliques primaire 24P et secondaire 24S.

On provoque ensuite l'entraînement en rotation de l'arbre de sortie 168 du moteur électrique 166, et donc de la roue de blocage 140, dans le sens inverse de celui mis en oeuvre précédemment, de préférence jusqu'à ce que la roue dentée de freinage 140 occupe à nouveau sa position axiale avant en butée contre le boîtier 14, cette position pouvant être détectée par une détection d'un pic du courant d'alimentation du moteur électrique 166.

La rotation de la roue dentée de blocage 140 permet, le "desserrage" du frein de stationnement, et donc du frein, qui retourne à son état initial illustré à la figure 8 dans le lequel il peut à nouveau être utilisé, notamment en frein de service.

A titre d'exemple, pour un piston primaire 16 de 38 mm de diamètre procurant une surface utile, ou surface efficace, de 1134 mm$^2$, la valeur de l'effort de freinage de service PBF est égal à 9073 Newtons pour une pression hydraulique de 80 bars, à 6805 Newtons pour une pression hydraulique de 60 bars, et à 4536 Newtons pour une pression hydraulique de 40 bars.

Pour un piston secondaire 82 de 48 mm de diamètre procurant une surface utile, ou surface efficace, de 1664 mm$^2$, la valeur de l'effort SBF exercé par le piston secondaire seul est égal à 13314 Newtons pour une pression hydraulique de 80 bars, à 9986 Newtons pour une pression hydraulique de 60 bars, et à 6657 Newtons pour une pression hydraulique de 40 bars.

Lors de la phase de mise sous pression en actionnement du frein de stationnement, et après « libération » de la tige de piston 120, l'effort total PBF + SBF est égal à 22387 Newtons pour une pression hydraulique de 80 bars, à 16791 Newtons pour une pression hydraulique de 60 bars, et à 11193 Newtons pour une pression hydraulique de 40 bars.

Après blocage mécanique en position actionnée du frein de stationnement et suppression de la pression hydraulique, la valeur de l'effort de freinage de stationnement « installé » est réduit d'environ 20% par rapport à la somme PBF + SBF.

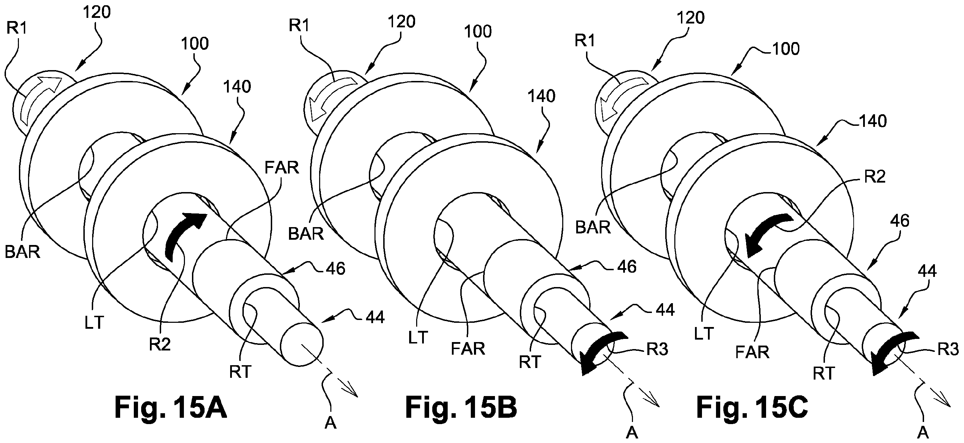

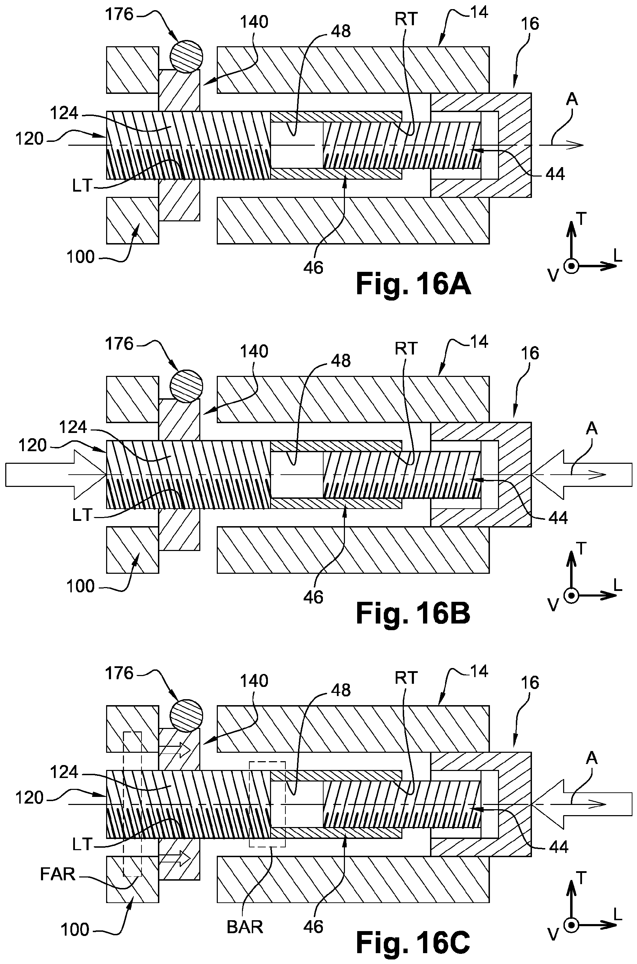

On se reportera maintenant essentiellement aux figures 15A à 15C et 16A à 16C.

L'interface filetée RT, ou pas de vis, entre l'écrou de rattrapage 46 et la vis de rattrapage 44 est un pas de vis à filetage réversible avec pas à droite, tandis que l'interface filetée LT entre le tronçon fileté 124 de la tige de piston 120 et la roue de blocage 140 est un pas de vis à filetage réversible à gauche.

A la figure 16B, lorsque l'effort "hydraulique" total de freinage en frein de stationnement est appliqué à l'ensemble qui est sous charge axialement, il n'y a pas de rotation sous charge de la vis de rattrapage 44.

Le blocage en rotation de l'écrou de rattrapage 46 par rapport au boîtier 14 permet l'établissement de l'effort de serrage des patins de frein sur le disque.

La course axiale de l'écrou de rattrapage 46 doit être possible pour permettre l'établissement de l'effort de serrage et le fonctionnement du groupe 43 de rattrapage automatique d'usure, en fonction de l'usure des garnitures de friction des patins de frein.

A la figure 16C, on a représenté l'état de l'ensemble lorsque l'alimentation des chambres hydraulique primaire 24P et secondaire 24S a été interrompue, et que la roue de blocage 140 est dans sa position axiale maximale arrière en butée axiale contre la face annulaire de butée 116 de la plaque transversale de butée 100.

La tige de piston 120 est bloquée en rotation par rapport à la plaque transversale de butée 100, ce blocage étant symbolisé par le rectangle BAR, tandis que le blocage en rotation de l'écrou de rattrapage 46 par rapport à la tige de piston 120 est symbolisé par le rectangle FAR.

L'effort "statique" de freinage de stationnement appliqué au piston primaire 16 est repris par la chaîne mécanique décrite précédemment.

Etant donnés les déplacements axiaux et en rotation relatifs des composants principaux (14-100, 140, 120, 46, 44 et 16) lors des différentes étapes de mise en oeuvre du frein (tant en frein de service qu'en frein de stationnement), il existe une série de jeux relatifs, notamment en rotation, qui sont notamment dus aux interfaces filetées, ou pas de vis, LT et RT.

En vue du maintien d'une valeur maximale de l'effort de freinage de stationnement, après relâchement de l'actionnement hydraulique, il est souhaitable qu'il n'existe à cet instant aucun jeu en rotation, ou le moins de jeu possible, entre les différents composants.

Cette caractéristique de fonctionnement est obtenue grâce à l'agencement "en série" des blocages en rotation BAR et FAR et grâce au choix des deux pas de vis opposés, ou inversés, à droite RT et à gauche LT.

Aux figures 15A à 15C, on a représenté par des flèches "blanches " R1 le sens de rotation de la tige de piston 120 sous l'action des couples qui lui sont appliqués, et par des flèches "noires" R2 et R3 respectivement, l'indication du couple appliqué à la tige de piston 120 et/ou à l'écrou de rattrapage 46, du fait des liaisons filetées RT et LT.

L'état représenté à la figure 15A correspond au comportement lors de l'établissement de l'effort de frein de stationnement.

L'état représenté à la figure 15B correspond au comportement lors de l'établissement de l'effort hydraulique total en frein de stationnement.

L'état représenté à la figure 15C correspond au comportement après le blocage « mécanique » en frein de stationnement et relâchement des efforts hydrauliques d'actionnement en frein de stationnement.

Dans l'état de frein de stationnement actionné, et en cas d'une panne ne permettant plus l'alimentation du moteur électrique 166 et/ou l'entraînement en rotation de la roue dentée de blocage 140, il est possible de "libérer" le frein de stationnement par une opération de maintenance en provoquant un léger desserrage axial des vis de montage et de fixation 22, qui entraîne alors un "desserrage" axial.

La conception qui vient d'être décrite permet aussi un assemblage préalable, ou pré-assemblage, d'un sous ensemble arrière qui est ensuite monté et fixé sur le boîtier 14. Ce sous ensemble comprend principalement le couvercle arrière 74, le piston secondaire 82, la plaque transversale de butée 100, la tige de piston 120, la roue de blocage 140, le corps tubulaire intermédiaire 63, et le mécanisme d'entraînement de la vis de blocage 140 avec notamment son moteur électrique 166.

La mise en oeuvre d'une chambre hydraulique secondaire 24S en association avec la chambre hydraulique primaire 24P pour l'application de l'effort total de freinage de stationnement permet d'établir un effort de freinage de stationnement très important, et la conception décrite précédemment permet d'assurer la mise en oeuvre du frein de stationnement sans faire appel à aucune vanne ou électrovanne hydraulique particulière.

La consommation électrique, ou consommation de courant, est très faible car les utilisations du moteur électrique sont très réduites, tant en durée que en couple.

LISTE DES REFERENCES

| | |
|---|---|
| 12 | étrier |
| 14 | boîtier avant |
| 16 | piston primaire |
| 18 | groupe d'actionnement hydraulique secondaire |
| 20 | face transversale arrière |
| 22 | vis axiales |
| 23 | perçages axiaux lisses |
| 24P | cavité hydraulique primaire |
| 24S | cavité hydraulique secondaire |
| 25 | alésage usiné |
| 26 | paroi transversale de fond |
| 28 | trou axial débouchant |
| 29 | gorge |
| 30 | paroi transversale avant |
| 31 | joint annulaire d'étanchéité |
| 32 | paroi latérale cylindrique tubulaire |
| 33 | face transversale arrière de fond |
| 34 | face transversale externe |
| 35 | face transversale arrière |
| 36 | face transversal annulaire arrière |
| 38 | paroi latérale |
| 40 | gorge radiale |
| 41 | joint annulaire |
| 42 | encoches |
| 43 | groupe de rattrapage automatique d'usure |
| 44 | vis de rattrapage |
| 45 | corps principal de la vis de rattrapage |
| 46 | écrou de rattrapage |
| 47 | tête de la vis de rattrapage |
| 48 | perçage taraudé de l'écrou de rattrapage |
| 50 | tronçon axial d'extrémité arrière |
| 51 | face annulaire transversale d'extrémité avant |
| 52 | face transversale avant |
| 53 | face latérale périphérique |
| 54 | portion interne du piston primaire |
| 55 | élément formant ressort |
| 56 | ensemble à action élastique |
| 57 | butée axiale à billes |
| 58 | ressort de rattrapage d'usure |
| 59 | cage |
| 60 | tronçon tubulaire court |
| 62 | surface cylindrique convexe |
| 63 | corps tubulaire intermédiaire |
| 64 | alésage interne |
| 66 | face transversale avant |
| 68 | face transversale arrière |
| 70 | lamage |
| 71 | facette transversale arrière |
| 72 | surface périphérique axiale cylindrique concave |
| 74 | couvercle arrière |
| 76 | face transversale avant |
| 78 | alésage interne borgne |
| 80 | paroi transversale arrière de fond |
| 82 | piston hydraulique secondaire |
| 84 | face transversale arrière |
| 86 | face transversale avant |
| 88 | gorge radiale interne |
| 89 | joint d'étanchéité |
| 90 | perçage axial interne |
| 92 | gorge radiale interne |
| 93 | joint annulaire d'étanchéité |
| 100 | plaque transversale |
| 101 | portion périphérique |
| 102 | paroi cylindrique convexe |
| 104 | face transversale arrière |
| 106 | face transversale avant |
| 110 | joint annulaire d'étanchéité |
| 112 | trou central |
| 114 | collerette axiale de butée |
| 116 | face transversale annulaire avant de butée |
| 120 | tige de piston |
| 122 | tronçon d'extrémité avant |
| 124 | tronçon central fileté |
| 126 | tronçon intermédiaire |
| 127 | face transversale arrière |
| 128 | tronçon axial d'extrémité arrière |
| 130 | perçage axial |

| | |
|---|---|
| 132 | tronçon d'extrémité avant |
| 134 | poussoir central |
| 136 | tronçon axial arrière |
| 138 | perçage axial |
| 140 | roue de blocage |
| 142 | trou central taraudé |
| 144 | périphérie radiale externe dentée |
| 146 | face transversale arrière |
| 148 | collerette |
| 150 | face transversale annulaire avant |
| 152 | butée axiale à rouleaux |
| 154 | face transversale avant |
| 160 | extension latérale transversale |
| 162 | logement intérieur |
| 163 | portée tronconique |
| 164 | capot |
| 166 | moteur électrique |
| 168 | arbre de sortie |
| 170 | pignon de sortie |
| 172 | pignon de grand diamètre |
| 174 | axe d'entraînement |
| 175 | extrémité de la vis |
| 176 | vis sans fin d'entraînement |
| 177 | portée tronconique concave |
| 180 | raccord hydraulique |
| 182 | raccord hydraulique |
| 200 | cannelures axiale |
| 202 | rainure axiales |
| 204 | génératrice axiale de fond |
| 206 | génératrice axiale |
| 208 | génératrice axiale de sommet |
| 210 | cannelure axiale |
| 212 | rainure axiale |
| 214 | génératrice axiale de fond |
| PHC | chambre hydraulique primaire |
| SHC | chambre hydraulique secondaire |
| IC | chambre intermédiaire |
| PBF | effort primaire de freinage |
| SBF | effort secondaire de freinage |

**Revendications**

1.  Frein à disque à commande hydraulique comportant un frein de stationnement à actionnement hydraulique, qui comporte :

> - un étrier de frein (12) qui comporte un boîtier (14) dans lequel est formée au moins une cavité hydraulique primaire (PHC) ouverte axialement vers l'avant ;
> - au moins un piston primaire (16) qui est monté coulissant axialement de manière étanche dans la cavité hydraulique primaire (PHC) du boîtier (16), qui est délimitée axialement vers l'arrière par une paroi transversale de fond (26) du boîtier et dans laquelle le piston primaire (16) délimite axialement une chambre hydraulique primaire (24P), le piston primaire (16) étant apte à coopérer avec un patin associé de frein à disque ;
- une tige de piston (120) qui est mobile axialement avec le piston primaire(16), qui est immobilisée en rotation par rapport au boîtier(14), qui traverse de manière étanche la paroi transversale de fond (26), et qui comporte un tronçon fileté (124) ;
- une roue (140), de blocage axial de la tige de piston (120), qui est montée vissée, de manière réversible, sur le tronçon fileté (124) de la tige de piston (120) de manière à être est mobile axialement par rapport à la tige de piston(120), vers l'arrière par vissage ou vers l'avant par dévissage ;
- un moteur électrique (166) commandé apte à entraîner en rotation la roue (140) de blocage ;
- une plaque transversale (100) de butée axiale qui est fixe axialement par rapport au boîtier (14) et qui comporte une face transversale avant de butée (116), la roue de blocage (140) étant mobile axialement, par rapport à la tige de piston (120), entre une position avant et une position arrière de butée dans laquelle la roue de blocage (140) est en appui axial vers l'arrière contre ladite face transversale avant de butée (116) ;
- une cavité intermédiaire (IC) qui est agencée axialement à l'arrière de la cavité hydraulique primaire (PHC), et qui est délimitée :

> -- axialement vers l'avant par la paroi transversale de fond (26), et axialement vers l'arrière par la plaque transversale de butée (100) ;
> -- et radialement par un corps tubulaire intermédiaire (63) qui est rapporté à une extrémité axiale arrière (20) du boîtier (14) ;

- et un couvercle arrière qui est rapporté à une extrémité axiale arrière (68) du corps tubulaire (63) et dans lequel est formée une cavité hydraulique secondaire (SHC) qui est délimitée axialement vers l'avant par la plaque transversale de butée (100) ;

frein dans lequel la tige de piston (120) comporte :

> --- un tronçon d'extrémité arrière (128) qui s'étend axialement vers l'arrière au-delà de la plaque transversale de butée (100) et qui est centré radialement par rapport au couvercle (74) ;
> --- un tronçon (126) *de blocage en rotation* qui s'étend axialement à travers la plaque transversale de butée (100) ;
> --- et un tronçon d'extrémité avant (122) qui s'étend axialement à travers la paroi transversale de fond (26) et qui est centré radialement par rapport à cette paroi transversale de fond (26) ;

**caractérisé en ce que** la plaque transversale de butée (100) est conformée en forme générale d'un disque dont une portion périphérique (101) est montée serrée axialement entre deux portions en vis-à-vis (71, 76) de l'extrémité arrière (68) du corps tubulaire (63) et de l'extrémité avant (76) du couvercle (74), respectivement.

2. Frein selon la revendication 1, **caractérisé en ce que** la portion périphérique (101) de la plaque transversale de butée (100) est en forme générale d'une rondelle délimitée axialement par deux facettes transversales annulaires parallèles, avant (106) et arrière (104), et par une paroi externe cylindrique convexe (110).

3. Frein selon la revendication 2, **caractérisé en ce que** :

   - la face transversale arrière (68) du corps tubulaire (63) comporte un lamage cylindrique (70) centré qui loge ladite potion périphérique (101), dont la profondeur axiale est supérieure à l'épaisseur axiale de ladite portion périphérique (101), et dont le diamètre intérieur est supérieur au diamètre extérieur de ladite portion périphérique (101) ; et
   - ladite portion périphérique (101) est montée serrée axialement entre le fond arrière (71) du lamage (70) et une portion en vis-à-vis de la face transversale avant (76) du couvercle (74).

4. Frein selon la revendication 3, **caractérisé en ce que** ladite portion périphérique (101) délimite, avec le lamage (70), un logement annulaire périphérique (72) dans lequel est agencé un joint annulaire d'étanchéité qui est monté comprimé axialement entre le fond arrière du lamage (70) et une portion annulaire en vis-à-vis de la face transversale avant (76) du couvercle.

5. Frein selon l'une quelconque des revendications précédentes, **caractérisé en ce qu'**il comporte des vis axiales (22) de montage et de serrage axial qui s'étendent à travers des perçages associés (23) du corps tubulaire intermédiaire (63).

6. Frein selon la revendication 5, **caractérisé en ce que** lesdites vis (22) sont réparties angulairement à la périphérie du corps tubulaire intermédiaire (63).

7. Frein selon l'une quelconque des revendications précédentes, **caractérisé en ce qu'**il comporte un piston secondaire (82) qui est monté coulissant axialement de manière étanche dans ladite cavité hydraulique secondaire (SHC) qui est une cavité hydraulique dans laquelle il délimite une chambre hydraulique secondaire(24S), et qui est apte à coopérer avec la tige de piston (120) pour exercer sur cette dernière un effort secondaire de poussée axiale (SBF), d'arrière en avant, lorsque la chambre hydraulique secondaire (24S) est alimentée en fluide sous pression.

8. Frein selon la revendication 7, **caractérisé en ce que** le tronçon d'extrémité axiale arrière (128) de la tige de piston (120) est guidé en coulissement axial étanche à travers le piston secondaire (82).

**Patentansprüche**

1. Scheibenbremse mit hydraulischer Steuerung, umfassend eine Parkbremse mit hydraulischer Betätigung, die umfasst:

   - einen Bremssattel (12), der ein Gehäuse (14) umfasst, in dem wenigstens ein primärer Hydraulikhohlraum (PHC) gebildet ist, der axial nach vorne geöffnet ist;
   - wenigstens einen Primärkolben (16), der axial auf dichte Weise verschiebbar in dem primären Hydraulikhohlraum (PHC) des Gehäuses (16) montiert ist, und der axial nach hinten durch eine transversale Bodenwand (26) des Gehäuses begrenzt ist, und wobei der Primärkolben (16) axial eine primäre Hydraulikkammer (24P) begrenzt, wobei der Primärkolben (16) dazu ausgelegt ist, mit einem zugeordneten Scheibenbremsbelag zusammenzuwirken;
   - eine Kolbenstange (120), die axial zusammen mit dem Primärkolben (16) bewegbar ist, und die bezüglich des Gehäuses (14) dreh-immobilisiert ist, die auf dichte Weise die transversale Bodenwand (26) durchsetzt und die einen Gewindeabschnitt (124) umfasst;
   - ein Rad (140) zur Axialblockade der Kolbenstange (120), das auf reversible Weise verschraubt auf dem Gewindeabschnitt (124) der Kolbenstange (120) derart montiert ist, dass es axial bezüglich der Kolbenstange (120) nach hinten durch Aufschrauben oder nach vorne durch Abschrauben bewegbar ist;
   - einen gesteuerten Elektromotor (166), der dazu ausgelegt ist, das Blockaderad (140) zur Drehung anzutreiben;
   - eine transversale Axialanschlagsplatte (100), die axial bezüglich des Gehäuses (14) fest ist und die eine transversale Anschlagsvorderfläche (116) umfasst, wobei das Blockaderad (140) axial bezüglich der Kolbenstange (120) zwischen einer vorderen Position und einer hinteren Anschlagsposition bewegbar ist, in der das Blockaderad (140) in axialer Anlage nach hinten gegen die transversale Anschlagsvorderfläche (116) ist;

- einen Zwischenhohlraum (IC), der axial hinter dem primären Hydraulikhohlraum (PHC) angeordnet ist, und der begrenzt ist:

- - axial nach vorne durch die transversale Bodenwand (26), und axial nach hinten durch die transversale Anschlagsplatte (100);
- - und radial durch einen Zwischenrohrkörper (63), der an einem axialen hinteren Ende (20) des Gehäuses (14) angebracht ist;

- und einen hinteren Deckel, der an einem axialen hinteren Ende (68) des Rohrkörpers (63) angebracht ist, und in dem ein sekundärer Hydraulikhohlraum (SHC) gebildet ist, der axial nach vorne durch die transversale Anschlagsplatte (100) begrenzt ist;

in welcher Bremse die Kolbenstange (120) umfasst:

--- einen hinteren Endabschnitt (128), der sich axial nach hinten über die transversale Anschlagsplatte (100) hinaus erstreckt, und der radial bezügliche des Deckels(74) zentriert ist;
--- einen Drehblockadeabschnitt (126), der sich axial durch die transversale Anschlagsplatte (100) hindurch erstreckt;
--- und einen vorderen Endabschnitt (122), der sich axial durch die transversale Bodenwand (26) hindurch erstreckt und der radial bezüglich dieser transversalen Bodenwand (26) zentriert ist;

**dadurch gekennzeichnet, dass** die transversale Anschlagsplatte (100) in der allgemeinen Form einer Scheibe gebildet ist, von der ein Umfangsbereich (101) axial eingespannt zwischen zwei gegenüberliegenden Bereichen (71, 76) des hinteren Endes (68) des Rohrkörpers (63) beziehungsweise des vorderen Endes (76) des Deckels (74) montiert ist.

**2.** Bremse nach Anspruch 1, **dadurch gekennzeichnet, dass** der Umfangsbereich (101) der transversalen Anschlagsplatte (100) die allgemeine Form einer Rundscheibe aufweist, die axial durch zwei transversale parallele Ringfacetten begrenzt ist, eine vordere (106) und eine hintere (104), sowie durch eine zylindrische konvexe Außenwand (110).

**3.** Bremse nach Anspruch 2, **dadurch gekennzeichnet, dass**:

- die transversale hintere Fläche (68) des Rohrkörpers (63) eine zentrierte zylindrische Senkung (70) umfasst, die den Umfangsbereich (101) aufnimmt, deren axiale Tiefe größer ist als die axiale Dicke des Umfangsbereichs (101), und deren Innendurchmesser größer ist als der Außendurchmesser des Umfangsbereichs (101); und
- der Umfangsbereich (101) axial eingespannt zwischen dem hinteren Boden (71) der Senkung (70) und einem Bereich montiert ist, der der transversalen Vorderfläche (76) des Deckels (74) gegenüberliegt.

**4.** Bremse nach Anspruch 3, **dadurch gekennzeichnet, dass** der Umfangsbereich (101) zusammen mit der Senkung (70) eine ringförmige Umfangsaufnahme (72) begrenzt, in der eine ringförmige Dichtung angeordnet ist, die axial komprimiert zwischen dem hinteren Boden der Senkung (70) und einem ringförmigen Bereich montiert ist, der der transversalen Vorderfläche (76) des Deckels gegenüberliegt.

**5.** Bremse nach einem der vorhergehenden Ansprüche, **dadurch gekennzeichnet, dass** sie axiale Montage- und Axialspannschrauben (22) umfasst, die sich durch zugeordnete Bohrungen (23) des Zwischenrohrkörpers (63) hindurch erstrecken.

**6.** Bremse nach Anspruch 5, **dadurch gekennzeichnet, dass** die Schrauben (22) angulär am Umfang des Zwischenrohrkörpers (63) verteilt sind.

**7.** Bremse nach einem der vorhergehenden Ansprüche, **dadurch gekennzeichnet, dass** sie einen Sekundärkolben (82) umfasst, der axial auf dichte Weise verschiebbar in dem sekundären Hydraulikhohlraum (SHC) montiert ist, welcher ein Hydraulikhohlraum ist, in dem er eine sekundäre Hydraulikkammer (24S) begrenzt, und der dazu ausgelegt ist, mit der Kolbenstange (120) zusammenzuwirken, um auf letztere eine sekundäre Axialdruckkraft (SBF) von hinten nach vorne auszuüben, wenn die sekundäre Hydraulikkammer (24S) mit Fluid unter Druck versorgt wird.

**8.** Bremse nach Anspruch 7, **dadurch gekennzeichnet, dass** der hintere axiale Endabschnitt (128) der Kolbenstange (120) zur dichten axialen Verschiebung durch den Sekundärkolben (82) hindurch geführt ist.

## Claims

**1.** A hydraulically-controlled disk brake including a hydraulically-actuated parking brake, which includes:

- a brake caliper (12) which includes a casing (14) in which at least one primary hydraulic cavity (PHC) is formed, which is open axially forward;

- at least one primary piston (16) which is sealingly axially slidingly mounted in the primary hydraulic cavity (PHC) of the casing (16), which is axially backward delimited by a bottom transverse wall (26) of the casing and in which the primary piston (16) axially delimits a primary hydraulic chamber (24P), the primary piston (16) being able to cooperate with an associated pad of disk brake;

- a piston rod (120) which is axially movable with the primary piston (16), which is rotatably immobilised relative to the casing (14), which sealingly passes through the bottom transverse wall (26), and which includes a threaded segment (124);

- a wheel (140) for axially blocking the piston rod (120), which is mounted reversibly screwed on the threaded segment (124) of the piston rod (120) so as to be axially movable relative to the piston rod (120), backward by screwing or forward by unscrewing;

- a controlled motor (166) able to drive the blocking wheel (140) to rotate;

- an axial stop transverse plate (100) which is axially fixed relative to the casing (14) and which includes a forward stop transverse face (116), the blocking wheel (140) being axially movable, relative to the piston rod (120), between a stop forward position and a stop backward position in which the blocking wheel (140) axially bears backward against said forward stop transverse face (116);

- an intermediate cavity (IC) which is axially arranged at the back of the primary hydraulic cavity (PHC), and which is delimited:

-- axially forward by the bottom transverse wall (26), and axially backward by the stop transverse plate (100);
-- and radially by an intermediate tubular body (63) which is joined to a back axial end (20) of the casing (14);

- and a back cover which is joined to a back axial end (68) of the tubular body (63) and in which a secondary hydraulic cavity (SHC) is formed, which is axially forward delimited by the stop transverse plate (100);

a brake in which the piston rod (120) includes:

--- a back end segment (128) which axially extends backward beyond the stop transverse plate (100) and which is radially centred relative to the cover (74);
--- a rotation blocking segment (126) which axially extends through the stop transverse plate (100);
--- and a front end segment (122) which axially extends through the bottom transverse wall (26) and which is radially centred relative to this bottom transverse wall (26);

**characterised in that** the stop transverse plate (100) is in the general shape of a disk a peripheral portion (101) of which is mounted axially clamped between two facing portions (71, 76) of the back end (68) of the tubular body (63) and of the front end (76) of the cover (74), respectively.

2. The brake according to claim 1, **characterised in that** the peripheral portion (101) of the stop transverse plate (100) has the general shape of a washer axially delimited by two parallel front (106) and back (104) annular transverse facets, and by a convex cylindrical outer wall (110).

3. The brake according to claim 2, **characterised in that**:

   - the back transverse face (68) of the tubular body (63) has a centred cylindrical counterbore (70) which accommodates said peripheral portion (101), the axial depth of which is greater than the axial depth of said peripheral portion (101), and the inner diameter of which is greater than the outer diameter of said peripheral portion (101); and
   - said peripheral portion (101) is mounted axially clamped between the back bottom (71) of the counterbore (70) and a facing portion of the front transverse face (76) of the cover (74).

4. The brake according to claim 3, **characterised in that** said peripheral portion (101) delimits, with the counterbore (70), a peripheral annular housing (72) in which an annular gasket is arranged, which is mounted axially compressed between the back bottom of the counterbore (70) and a facing annular portion of the front transverse face (76) of the cover.

5. The brake according to any of the previous claims, **characterised in that** it includes axial screws (22) for an axial mounting and clamping which extend through associated holes (23) of the intermediate tubular body (63).

6. The brake according to claim 5, **characterised in that** said screws (22) are angularly distributed at the periphery of the intermediate tubular body (63).

7. The brake according to any of the previous claims, **characterised in that** it includes a secondary piston (82) which is sealingly axially slidingly mounted in said secondary hydraulic cavity (SHC) which is a hydraulic cavity in which it delimits a secondary hydraulic chamber (24S), and which is able to cooperate with the piston rod (120) to exert on the latter a secondary axial thrust load (SBF), from back to front, when the secondary hydraulic chamber (24S) is supplied with a pressurised fluid.

8.  The brake according to claim 7, **characterised in that** the back axial end segment (128) of the piston rod (120) is guided to sealingly axially slide through the secondary piston (82).

**Fig. 1**

**Fig. 2**

Fig. 3

EP 3 087 286 B1

17

**Fig. 4**

**Fig. 7**

Fig. 6

Fig. 5

Fig. 8

**Fig. 9A**

**Fig. 9B**

EP 3 087 286 B1

**Fig. 10A**

**Fig. 10B**

EP 3 087 286 B1

**Fig. 11**

EP 3 087 286 B1

**Fig. 12A**          **Fig. 12B**

Fig. 14A

Fig. 13A

Fig. 13B

**Fig. 14B**

**Fig. 14C**

**Fig. 14D**

**Fig. 14E**

Fig. 15A    Fig. 15B    Fig. 15C

EP 3 087 286 B1

Fig. 16A

Fig. 16B

Fig. 16C

**EP 3 087 286 B1**

## RÉFÉRENCES CITÉES DANS LA DESCRIPTION

**Documents brevets cités dans la description**

- EP 551397 B1